# EUROPÄISCHE PATENTSCHRIFT

(11) **EP 0 903 286 B1**
(45) Veröffentlichungstag und Bekanntmachung des Hinweises auf die Patenterteilung: **20.11.2002**
(21) Anmeldenummer: 98117035.0
(22) Anmeldetag: 09.09.1998
(51) Int. Cl.: B62D 65/00, B62D 29/04

(54) **Vorrichtung zum sicheren, formschlüssigen Montieren, Ausrichten und Fixieren von Karosserieteilen**
Device for securely mounting, positioning and fixing a vehicle body part
Appareil pour monter, positionner et fixer une pièce de carosserie par liason de forme

(30) Priorität: 18.09.1997 DE 19741062
(43) Veröffentlichungstag der Anmeldung: 24.03.1999
(73) Patentinhaber: REHAU AG + Co, 95111 Rehau (DE); DaimlerChrysler AG, 70567 Stuttgart (DE)
(72) Erfinder: Bräuner, Michael, 08527 Strassberg (DE); Landrock, Klaus, 95111 Rehau (DE); Tischler, Wolfgang, 08529 Plauen (DE); Kleiner, Horst, 70499 Stuttgart (DE); Fischer, Carola, Dorridge, Solihull, Westmidlands B938ST (GB)

(56) Entgegenhaltungen:
- DE-C- 4 446 484
- DE-U- 29 502 439
- GB-A- 2 251 884

## Beschreibung

Die Erfindung betrifft eine Vorrichtung zum sicheren, formschlüssigen Montieren, Ausrichten und Fixieren von Karosserieteilen bei manuell oder mit Werkzeugen nicht oder schlecht zugänglichen Befestigungspunkten.

Die DE 44 46 484 C1, die den nächstliegenden Stand der Technik zeigt, offenbart eine Vorrichtung zum sicheren, formschlüssigen Montieren, Ausrichten und Fixieren eines Verkleidungsteils an einem Armaturenbrett. Das Armaturenbrett weist Schlitze auf, durch die Befestigungsstege des Verkleidungsteils gesteckt werden. Zur Fixierung dient eine Befestigungsleiste, die auf der Rückseite des Armaturenbretts angeordnet ist. Diese Leiste weist eine Reihe von Haltezungen auf, die durch Verschieben der Leiste in Öffnungen der Befestigungsstege eingeführt werden. Die Fixierung der Befestigungsleiste in der vorgesehenen Endposition erfolgt mittels einer Rastnase.

Aus der GB-A-2 251 884 ist eine Befestigungsvorrichtung bekannt, die eine schlüssellochförmige Ausnehmung enthält. Das Langloch dieser Ausnehmung bildet eine geneigte Ebene. Die Vorrichtung wird in eine Ausnehmung eines zu befestigenden Teils eingesetzt. Anschließend wird das Teil auf einen Bolzen oder eine Schraube einer Befestigungsfläche aufgesetzt und verschoben. Der Kopf des Bolzens gelangt bei diesem Verschieben in den Bereich der geneigten Ebene, so daß das Teil gegen die Befestigungsfläche gedrückt wird.

Es ist bekannt, bei Kraftfahrzeugen, insbesondere bei Pkw, die Karosserieteile im Bereich der Front-, Heck- und/oder Seitenflächen für die Anordnung des Stoßfängers oder dessen Verkleidung mit einer Verprägung zu versehen, um den Stoßfänger, insbesondere jedoch dessen Verkleidung, mehr oder weniger integriert in die Karosserie anzuordnen. Zwischen dem Stoßfänger und der Karosserie ergibt sich dadurch eine Trennfuge.

Diese Fuge soll möglichst klein und parallel zur Karosserie sein. Häufig soll der senkrechte Formverlauf der Karosserie absatzfrei im Stoßfänger oder dessen Verkleidung fortgesetzt werden.

Zur Unterstützung der Stoßfänger- oder der Verkleidungsoberkante werden in der Höhe überwölbte Schienen aus einem steiferen Werkstoff unter der Stoßfänger- oder Verkleidungsoberkante angeordnet und mehrfach an der Karosserie befestigt. Dabei sind die Montagepunkte nicht alle gleich gut zugänglich für eine manuelle oder mit Werkzeugen auszuführende Befestigung.

Diese Beschreibung ist nur beispielhaft. Gleiche Schwierigkeiten ergeben sich auch für andere Montagevorgänge an Kraftfahrzeugen, z. B. bei Zierleisten, Karosserieabdeckungen usw.

Der Erfindung liegt die Aufgabe zugrunde, auch an manuell oder mit Werkzeugen schwer oder nicht zugänglichen Befestigungspunkten die Montageteile sicher vorzumontieren, auszurichten und zu fixieren.

Diese Aufgabe wird durch Ausbildung der Vorrichtung gemäß den Kennzeichen der Ansprüche 1 oder 2 gelöst. Die erfindungsgemäße eine Vorrichtung besteht aus einer verschiebbar an einem Anbauteil vormontierten Schiene, die mit Schlüssellöchern mit geneigten Ebenen ausgestattet ist, in die der Bolzenkopf von karosserieseitig abstehenden Bolzen einsetzbar ist und beim Verschieben der Schiene zum Ausrichten und Festlegen des Anbauteils auf der geneigten Ebene aufgleitet und die so erreichte Anbauposition mittels eines in ein an einer gut zugänglichen Stelle der Schiene angeordnetes Befestigungsloch eingebrachten Befestigungsmittels zur Karosserie hin gesichert wird. Die erfindungsgemäße andere Vorrichtung besteht aus einer an einem Anbauteil fest montierten Schiene, die einen in Langlöchern verschiebbaren Schieber aufweist und dieser mit Schlüssellöchern mit geneigten Ebenen ausgestattet ist, in die ein eine zugeordnete Öffnung der Schiene durchgreifender Bolzenkopf von karosserieseitig abstehenden Bolzen einsetzbar ist und beim Verschieben des Schiebers zum Ausrichten und Festlegen des Anbauteils auf der geneigten Ebene aufgleitet und die so erreichte Anbauposition mittels eines in ein an einer gut zugänglichen Stelle der Schiene und des Schiebers angeordnetes Befestigungsloch eingebrachten Befestigungsmittels zur Karosserie hin gesichert wird.

Der Einsatz der Vorrichtung gemäß den Patentansprüchen 1 oder 2 wird am Beispiel der Stoßfängermontage näher erläutert.

Bei der Montage unter Zuhilfenahme der Vorrichtung gemäß dem Patentanspruch 1 wird der Stoßfänger zunächst von vom oder hinten auf das Fahrzeug aufgeschoben. An den schwer zugänglichen Befestigungsstellen sind die Befestigungsbolzen mit Kopf zunächst noch gut zu sehen. Die Stoßfänger oder die Stoßfängerverkleidung kann mit der Vorrichtung zunächst lose über die Befestigungsbolzen in die Schlüssellöcher eingehängt werden. Danach wechselt der Monteur in eine für das Verschieben der Schiene günstige Position.

Durch das Verschieben der Vorrichtung in die Befestigungsstellung wird der Stoßfänger mittels der Befestigungsbolzen und der Schlüssellöcher ausgerichtet, über die geneigte Ebene die gewünschte Fuge eingestellt und der Stoßfänger an diesem Befestigungspunkt festgelegt.

Zuletzt erfolgt die Endbefestigung an einem gut zugänglichen Befestigungspunkt mit der Karosserie. Dabei werden auch die Vorrichtung und der Stoßfänger gleichzeitig in ihre Position fixiert, z. B. durch Verschraubung.

In vorteilhafter Ausgestaltung der Erfindung sind die Berührungsflächen zwischen den geneigten Ebenen und den Befestigungsbolzen mit Kopf im gleichen Winkel zueinander zur Übertragung größerer Kräfte durch eine geringe Flächenpressung angeordnet sind.

Die Montage eines Stoßfängers unter Zuhilfenahme der Vorrichtung nach dem Patentanspruch 2 erfolgt wie vorher beschrieben, jedoch muß für die Ausrichtung und Festlegung nun der Schieber verschoben werden. Die fest am Montageteil montierte Vorrichtung kann in ihrer Position verbleiben. Dadurch entstehen besonders bei komplizierten Geometrien der Teile und/oder des Fugenverlaufes Vorteile für die Toleranzsituation des Gesamtsystemes.

Weiterhin vorteilhaft bei dieser Vorrichtung ist, daß die Berührungsflächen zwischen den geneigten Ebenen und den Befestigungsbolzen mit Kopf im gleichen Winkel zueinander zur Übertragung größerer Kräfte durch eine geringe Flächenpressung angeordnet sind.

Die Erfindung ist in der Zeichnung an zwei Ausführungsbeispielen schematisch gezeigt und wird anhand dieser nachstehend noch näher erläutert. Es zeigt:
- Figur 1:: die Anbindung eines vorderen Stoßfängers an die Karosserie in perspektivischer Darstellung und den Schnitt A-A
- Figur 2:: die Vorrichtung und einen Längsschnitt durch diese den Befestigungsbolzen mit Kopf an der Karosserie
- Figur 3:: die Vorrichtung wie Figur 2 in anderer Ausgestaltung.

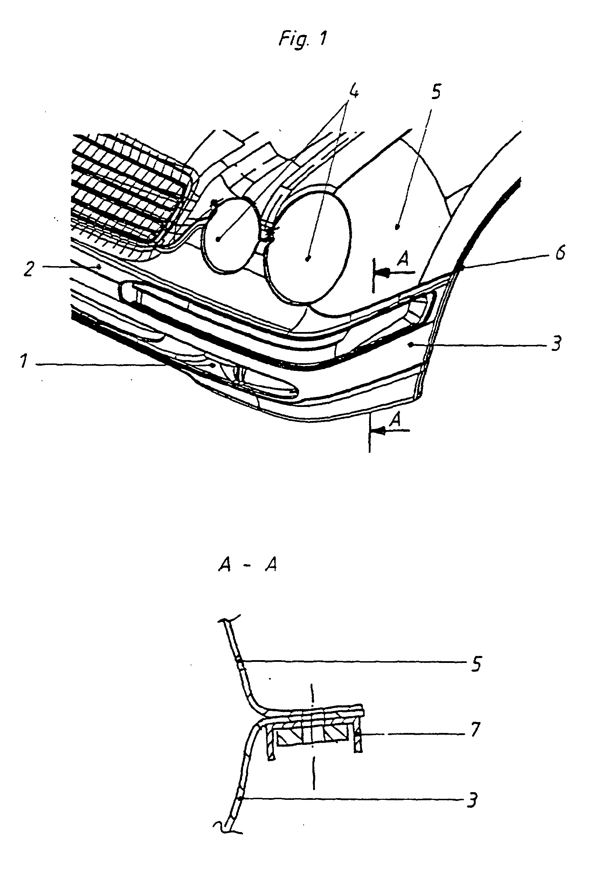

Das in Figur 1 gezeigte Formteil, die Verkleidung eines Frontstoßfängers 1, weist einen mittleren, sich über die Breite des Fahrzeuges erstreckenden Bereich 2 und die zwei Stoßfängerseitenschenkel (nur links dargestellt) 3 auf. Weiterhin sind die Leuchteneinheit 4 und der Kotflügel 5 dargestellt. Zwischen dem Kotflügel 5 und dem Stoßfänger Seitenschenkel 3 ergibt sich eine Montagefuge 6.
Im Schnitt A-A durch diese Montagefuge 6 sind der Kotflügel mit seinem Einzug, die Oberkante des Stoßfängerseitenschenkels 3 und die Vorrichtung 7 zu sehen.

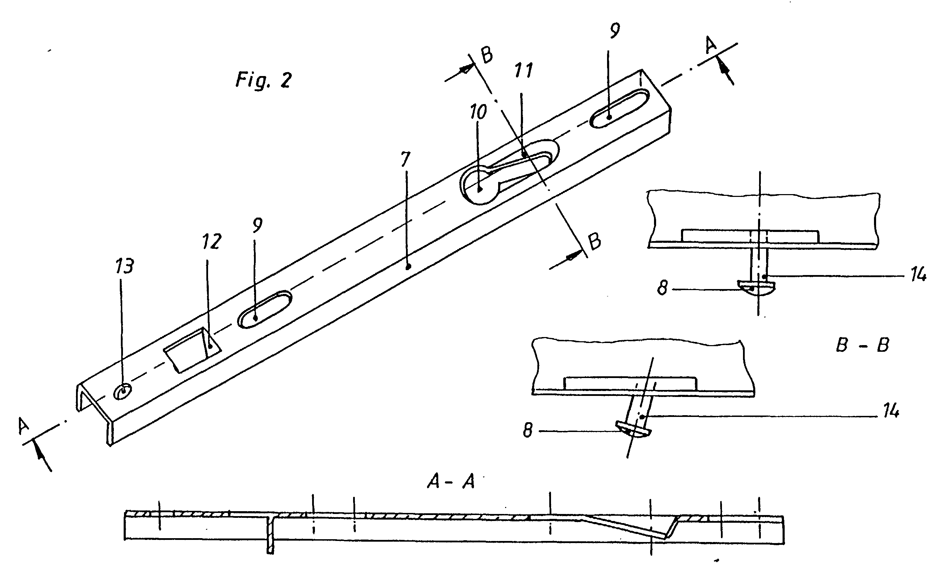

In Figur 2 ist die Vorrichtung 7 im Detail dargestellt. Über Langlöcher 9 erfolgt eine längsverschiebbare Vormontage mit dem Stoßfängerseitenschenkel 3.

Die Vorrichtung 7 weist an der schwer zugänglichen Befestigungsstelle ein Schlüsselloch 10 auf. Am Schlüsselloch 10 befindet sich die geneigte Ebene 11.
Weiterhin weist die Vorrichtung 7 ein Betätigungselement 12 und ein Befestigungsloch 13 an einer für die Montage gut zugänglichen Stelle auf.
Im Schnitt durch die Vorrichtung 7 ist auch ein Befestigungsbolzen 14 mit Bolzenkopf 8 dargestellt.
In vorteilhafter Ausgestaltung wird der Befestigungsbolzen 14 oder nur der Bolzenkopf 8 schräg, im gleichen Winkel wie die geneigte Ebene 11, gestellt.

Bei der Montage wird der Stoßfänger 1 zunächst in Längsrichtung auf das Fahrzeug aufgeschoben. Dabei bleiben die Stoßfängerseitenschenkel 3 frei. Im nächsten Arbeitsgang werden die Stoßfängerseitenschenkel 3 angehoben und mit den Schlüssellöchern 10 lose an den in der Montagefuge 6 noch sichtbaren Befestigungsbolzen 14 mit Bolzenkopf 8 eingehängt.
Die Stoßfängerseitenschenkel 3 können sich jetzt nicht mehr vom Fahrzeug lösen.
Der Monteur wechselt dann seine Arbeitsposition zum Radausschnitt. Durch einfaches Verschieben der Vorrichtung 7 am Betätigungselement 12 wird der Stoßfängerseitenschenkel 3 über das Schlüsselloch 10 seitlich ausgerichtet. Über die geneigte Ebene 11 wird der Stoßfängerseitenschenkel 3 angehoben, die Montagefuge 6 geschlossen und der Stoßfängerseitenschenkel 3 festgesetzt.

Wenn die richtige Position des Stoßfängerseitenschenkels 3 erreicht ist, erfolgt über das Befestigungsloch 13 eine weitere Befestigung zur Karosserie, z. B. durch Verschraubung.
Diese Befestigung fixiert zusätzlich die Lage von Stoßfängerseitenschenkel 3 und der Vorrichtung 7.

Die Befestigung über Schlüsselloch 10, geneigte Ebene 11 und Befestigungsbolzen 14 mit Bolzenkopf 8 kann an einer oder mehreren Stellen gleichzeitig erfolgen.

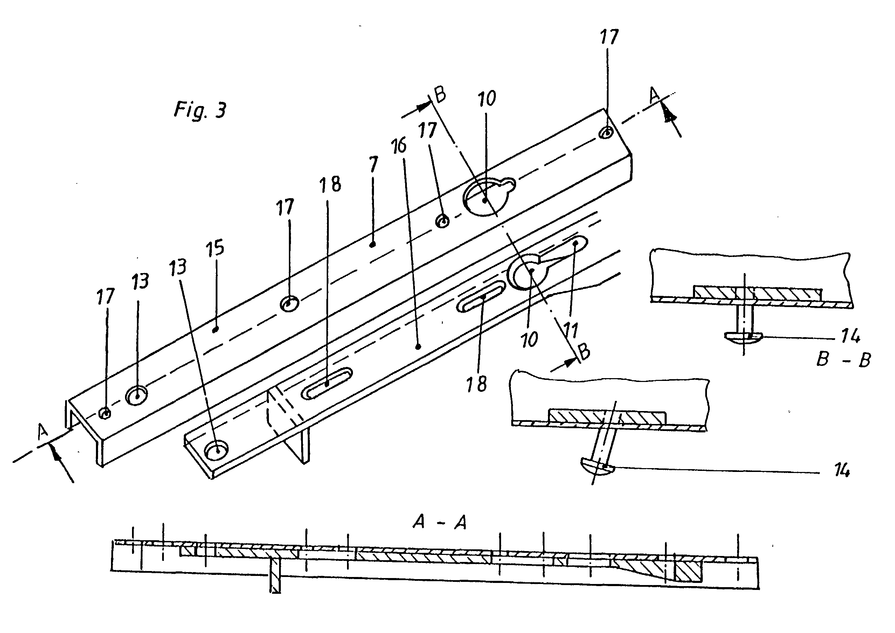

Figur 3 zeigt die Vorrichtung 7 in einer weiteren vorteilhaften Ausgestaltung, bestehend aus einer Schiene 15, mit einem verschiebbaren Schieber 16. In dieser Ausführung weist die Schiene 15 runde Löcher 17 und der Schieber Langlöcher 18 auf, über die beide mit Hilfe von Befestigungsmitteln derart verbunden sind, daß der Schieber 16 über die Langlöcher 18 auf der Schiene 15 verschiebbar ist.
Wie in Figur 2 weist die Schiene 15 ein Befestigungsloch 13 und ein Schlüsselloch 10 auf. Dieses Schlüsselloch 10 dient aber nur der losen Vormontage des Stoßfängerseitenschenkels 3 mit dem Befestigungsbolzen 14 mit dem Bolzenkopf 8.
Der Schieber 16 weist in dieser Ausführung das Schlüsselloch 10 mit der geneigten Ebene 11 das Betätigungselement 12 und das Befestigungsloch 13 auf.
Beim Verschieben des Schiebers 16 in der Schiene 15 vom Radlauf aus erfolgt die Ausrichtung und Festlegung des Stoßfängerseitenschenkels 3, wie bei Figur 2 beschrieben. Wenn die richtige Position des Stoßfängerseitenschenkels 3 erreicht ist, steht das Befestigungsloch 13 des Schiebers 16 genau über dem Befestigungsloch 13 der Schiene 15, so daß der Stoßfängerseitenschenkel 3 mit der Schiene 15 und dem Schieber 16 in dieser Position fixiert ist.

In vorteilhafter Ausgestaltung wird der Befestigungsbolzen 14 oder nur der Bolzenkopf 8 schräg, im gleichen Winkel wie die geneigte Ebene 11, gestellt.

Die Befestigung über Schlüsselloch 10, geneigte Ebene 11 und Befestigungsbolzen 14 mit Bolzenkopf 8 kann an einer oder mehreren Stellen gleichzeitig erfolgen.

## Patentansprüche

1. Vorrichtung zum sicheren, formschlüssigen Montieren, Ausrichten und Fixieren von Karosserieteilen bei manuell oder mit Werkzeugen nicht oder schlecht zugänglichen Befestigungspunkten, bestehend aus einer verschiebbar an einem Anbauteil (3) vormontierten Schiene (7), die mit Schlüssellöchern (10) mit geneigten Ebenen (11) ausgestattet ist, in die der Bolzenkopf (8) von karosserieseitig abstehenden Befestigungsbolzen (14) einsetzbar ist und beim Verschieben der Schiene (7) zum Ausrichten und Festlegen des Anbauteils (3) auf der geneigten Ebene (11) aufgleitet und die so erreichte Anbauposition mittels eines in ein an einer gut zugänglichen Stelle der Schiene (7) angeordnetes Befestigungsloch (13) eingebrachten Befestigungsmittels zur Karosserie hin gesichert wird.

2. Vorrichtung zum sicheren, formschlüssigen Montieren, Ausrichten und Fixieren von Karosserieteilen bei manuell oder mit Werkzeugen nicht oder schlecht zugänglichen Befestigungspunkten, bestehend aus einer an einem Anbauteil (3) fest montierten Schiene (15), die einen in Langlöchem (18) verschiebbaren Schieber (16) aufweist und dieser mit Schlüssellöchern (10) mit geneigten Ebenen (11) ausgestattet ist, in die ein eine zugeordnete Öffnung der Schiene (15) durchgreifender Bolzenkopf (8) von karosserieseitig abstehenden Befestigungsbolzen (14) einsetzbar ist und beim Verschieben des Schiebers (16) zum Ausrichten und Festlegen des Anbauteils (3) auf der geneigten Ebene (11) aufgleitet und die so erreichte Anbauposition mittels eines in einer an einer gut zugänglichen Stelle der Schiene (15) und des Schiebers (16) angeordnetes Befestigungsloch (13) eingebrachten Befestigungsmittels zur Karosserie hin gesichert wird.

3. Vorrichtung nach den Ansprüchen 1 oder 2, **dadurch gekennzeichnet, daß** die Berührungsflächen zwischen den geneigten Ebenen (11) und den Befestigungsbolzen (14) mit Kopf (8) im gleichen Winkel zueinander zur Übertragung größerer Kräfte durch eine geringe Flächenpressung angeordnet sind.

## Claims

1. Device for the secure, form-flush installation, alignment and attachment of bodywork parts with fastening points which are not or poorly accessible manually or with tools, consisting of a sliding rail (7) mounted on the part (3) equipped with keyholes (10) with inclined planes (11), in which the pin head (8) of the fastening pin (14) projecting from the body can be inserted and which slides to the inclined plane (11) when the rail (7) is moved to align and attach the part (3), and the position reached in this manner is secured to the body by a fastener located at a fastening hole (13) located at an easily accessible point of the rail (7).

2. Device for the secure, form-flush installation, alignment and attachment of bodywork parts with fastening points which are not or poorly accessible manually or with tools, consisting of a rail (15) firmly attached to the part (3) in which a moving slide (16) is located in slots (18), which is equipped with keyholes (10) with inclined planes (11), in which pin head (8) of a fastening pin (14) projecting from the body engaging in an opposing opening in the rail (15) can be inserted and which slides to the inclined plane (11) when the slide (16) is moved to align and attach the part (3), and the position reached in this manner is secured to the body by a fastener located at a fastening hole (13) located at an easily accessible point of the rail (15).

3. Device according to Claims 1 or 2, **characterised by**: the contact surfaces between the inclined planes (11) and the fastening pin (14) with head (8) are located at the same angle to each other to transmit higher forces at a low contact pressure.

## Revendications

1. Dispositif permettant le montage, l'ajustage et la fixation mécaniques sûrs d'éléments de carrosserie en des points de fixation impossibles à atteindre ou difficilement accessibles manuellement ou avec des outils, comprenant un rail (7) prémonté de manière coulissante sur un élément à ajouter (3) muni de trous de serrure (10) avec des plans inclinés (11) dans lesquels peut pénétrer la tête (8) de boulons de fixation (14) écartés de la carrosserie, qui lors du déplacement du rail (7) afin d'ajuster et de positionner l'élément à ajouter (3) glisse en remontant sur le plan incliné (11), la position ainsi atteinte par rapport à la carrosserie étant sécurisée à l'aide d'un moyen de fixation pénétrant dans un trou de fixation (13) disposé en un endroit bien accessible du rail (7).

2. Dispositif permettant le montage, l'ajustage et la fixation mécaniques sûrs d'éléments de carrosserie en des points de fixation impossibles à atteindre ou difficilement accessibles manuellement ou avec des outils, comprenant un rail (15) fixé solidairement à un élément à ajouter (3), présentant un coulisseau (16) pouvant coulisser dans des trous oblongs (18), celui-ci étant muni de trous de serrure (10) à plans inclinés (11), dans lesquels peut pénétrer une tête (8) de boulons de fixation (14) écartés de la carrosserie traversant une ouverture correspondante du rail (15), qui lors du déplacement du coulisseau (16) afin d'ajuster et de positionner l'élément à ajouter (3) glisse en remontant sur le plan incliné (11), la position ainsi atteinte par rapport à la carrosserie étant sécurisée à l'aide d'un moyen de fixation pénétrant dans un trou de fixation (13) disposé en un endroit bien accessible du rail (15) et du coulisseau (16).

3. Dispositif selon la revendication 1 ou 2, **caractérisé en ce que** les surfaces de contact entre les plans inclinés (11) et les boulons de fixation (14) avec la tête (8) sont disposées entre eux selon le même angle afin d'assurer la transmission de forces élevées avec une faible pression superficielle.
